# EUROPÄISCHE PATENTSCHRIFT

(11) **EP 3 064 790 B1**
(45) Veröffentlichungstag und Bekanntmachung des Hinweises auf die Patenterteilung: **24.06.2020**
(21) Anmeldenummer: 16158611.0
(22) Anmeldetag: 04.03.2016
(51) Int. Cl.: F16C 11/06, F16B 21/07

(54) **STECKKUPPLUNG AUS KUPPLUNGSELEMENT UND KUGELZAPFEN**
PLUG-IN COUPLING COMPRISING COUPLING ELEMENT AND BALL STUD
RACCORD ENFICHABLE AVEC ELEMENT DE COUPLAGE ET PIVOT A ROTULE

(30) Priorität: 06.03.2015 DE 202015101103 U
(43) Veröffentlichungstag der Anmeldung: 07.09.2016
(73) Patentinhaber: Böllhoff Verbindungstechnik GmbH, 33649 Bielefeld (DE)
(72) Erfinder: Heimann, Vanessa, 33098 Paderborn (DE); Vorderwisch, Alexander, 33803 Steinhagen (DE)
(74) Vertreter: HWP Intellectual Property

(56) Entgegenhaltungen:
- DE-A1-102013 102 197
- DE-U1- 20 216 836
- US-A- 5 653 548
- US-A1- 2002 114 660

## Beschreibung

### 1. Gebiet der Erfindung

Die vorliegende Erfindung betrifft eine Steckkupplung zum lösbaren Verbinden eines ersten Bauteils mit einem zweiten Bauteil, die aus einem Kupplungselement und einem Kugelzapfen aufgebaut ist.

### 2. Hintergrund der Erfindung

Im Stand der Technik ist eine Vielzahl von Steckkupplungen bekannt, die der Verbindung von zwei Bauteilen dienen. In Abhängigkeit von der Konstruktion der Steckkupplung, die meist mit einem Kugelzapfen oder Kugelbolzen zusammenwirkt, und deren Materialwahl werden unterschiedliche Verbindungseigenschaften realisiert. Die Begriffe Kugelzapfen und Kugelbolzen werden gleich bedeutend verwendet. Sie bezeichnen ein langgestrecktes stiftähnliches Bauteil mit einem kugelförmigen Ende.

Die DE 299 20 379 U1 und EP 0 902 198 B1 beschreiben Steckkupplungen, die aufgrund ihrer Konstruktion und dem elastischen Material, aus dem sie bestehen, Schwingungen der Bauteile dämpfen können. Dies wird speziell durch eine gewisse Bewegbarkeit des Kugelkopfes erzielt, nachdem er in der Kupplung mit der ihn umgreifenden Kugelpfanne eingerastet worden ist.

Eine ähnliche Konstruktion beschreibt US 4,176,428. Mit dieser Steckkupplung wird ähnlich wie in DE 299 20 379 U1 oder US 5,580,204 ein Verkleidungsteil an einem tragenden Teil, beispielsweise eine Rahmenstruktur eines Kraftfahrzeugs, befestigt. Verkleidungsteile sind zumeist Bauteile mit geringem Gewicht und einer gewissen Flexibilität. Daher ist die Kupplung in ihrer Stabilität weniger aufwendig als bei der Befestigung von starren und schweren Teilen. Zudem müssen gerade bei Verkleidungsteilen Schwingungen dämpfbar sein, was über die Flexibilität und Elastizität des Kupplungsmaterials gewährleistet ist.

US 4,176,428 beschreibt zu diesem Zweck eine Kupplung mit zwei hintereinander geschalteten Kugelräumen oder Kugelpfannen, in denen der Kugelkopf des Kugelbolzens einschnappbar ist. Die erste Kugelpfanne bestimmt eine Verbindung zwischen Kupplung und Kugelkopf zur Vormontage der beiden Bauteile, während die zweite Kugelpfanne die finale Befestigungsposition zwischen Kupplung und Kugelkopf festlegt. Insgesamt eignen sich diese Steckkupplungen aber nicht für die Verbindung starrer großer und schwerer Bauteile, weil deren Schwingungsverhalten ein unkontrolliertes Lösen der Steckkupplung bewirken würde.

Eine weitere Art von Steckkupplung, die gerade für mechanisch belastete Verbindungen geeignet ist, beschreiben US 5,653,548 und DE 10 2013 102 197 A1. Die hier beschriebenen Kupplungen nehmen den Kugelkopf auf, in dem dieser hinter in Einsetzrichtung geneigten Stegen verrastet. Die Stege liegen am Kugelkopf an und sind einseitig an der Kupplung befestigt. Sie werden beim Versuch des Entfernens des Kugelkopfes aus der Kupplung entgegen der Einsetzrichtung verschwenkt. Dies führt dazu, dass die Stege aufgrund ihrer Länge und der nur begrenzten Verschwenkbarkeit die Ein- und Ausgangsöffnung der Kupplung blockieren. Daher kann die Verbindung zwischen Kugelkopf und Kupplung nur über die Zerstörung der Kupplung gelöst werden. Dies ist aber gerade bei der Notwendigkeit des Lösens einer Verbindung unvorteilhaft, weil nachfolgend die Kupplung ersetzt werden müsste.

Es ist daher die Aufgabe vorliegender Erfindung, eine Steckkupplung zum Verbinden von zwei Bauteilen bereitzustellen, die mechanisch hochbelastbar und gleichzeitig lösbar ist. Im Speziellen ist eine Steckkupplung gefordert, die schwere Bauteile, bevorzugt mit einer Masse um die 500 g, unter der Belastung mechanischer Schwingungen im Bereich von ca. 0 bis 200 Hz verlässlich lösbar aneinander befestigt.

### 3. Zusammenfassung der Erfindung

Die obige Aufgabe wird durch ein Kupplungselement gemäß dem unabhängigen Anspruch 1, durch eine Steckkupplung gemäß Anspruch 8, durch eine Verbindung zwischen zwei Bauteilen mit Hilfe der Steckkupplung gemäß Anspruch 9 sowie ein Spritzgussverfahren für ein Kupplungselement gemäß Anspruch 10 gelöst. Vorteilhafte Ausführungsformen und Weiterentwicklungen vorliegender Erfindung ergeben sich aus der detaillierten Beschreibung, den Zeichnungen sowie den anhängenden Ansprüchen.

Die erfindungsgemäße Steckkupplung dient dem lösbaren Verbinden eines ersten Bauteils mit einem zweiten Bauteil. Diese Steckkupplung umfasst ein Kupplungselement und einen Kugelzapfen. Das Kupplungselement weist die folgenden Merkmale auf: das Kupplungselement ist einteilig aus Kunststoff aufgebaut mit einem ringförmigen Basiselement, das eine Aufnahmeöffnung für einen Kugelzapfen bildet, und das eine Befestigungsstruktur an einer radialen Außenseite des Basiselements aufweist, mit der das Kupplungselement in einer Öffnung des ersten Bauteils befestigbar ist, und dass eine pfannenartige Haltestruktur an einer radialen Innenseite des Basiselements umfasst, in der ein kugelförmiges Ende des Kugelzapfens einrastbar und aus der das kugelförmige Ende ohne Beschädigung der Haltestruktur lösbar ist, wobei die pfannenartige Haltestruktur aufweist: ein mittig angeordnetes Stützelement, an dem das kugelförmige Ende des Kugelbolzens abstützbar ist, sowie eine Mehrzahl von einseitig am ringförmigen Basiselement angeformten Haltestegen, die federnd radial einwärts und in einer Einsetzrichtung des Kugelzapfens geneigt in das Kupplungselement ragen, wobei die Haltestege zumindest einen ersten und einen zweiten winklig zueinander ausgerichteten, vorzugsweise gerade verlaufenden, Stegabschnitt umfassen, die miteinander verbunden sind, der erste Stegabschnitt mit einer Symmetrieachse des Kupplungselements einen Winkel α aus einem Bereich von 45° ≤ α ≤ 90° einschließt und der erste Stegabschnitt und der zweite Stegabschnitt in einem stumpfen Winkel zueinander angeordnet sind.

Vorliegende Steckkupplung dient dem Verbinden eines ersten und eines zweiten Bauteils, wobei das eine Bauteil beispielsweise über eine Bauteilöffnung mit dem einteiligen Kupplungselement und das andere Bauteil mit dem Kugelzapfen oder Kugelbolzen verbunden ist. Kugelzapfen oder Kugelbolzen bezeichnen in diesem Zusammenhang eine stiftähnliche Anordnung, von dem ein Ende am Bauteil befestigt ist, beispielsweise über Verschrauben, Vernieten oder Kleben, und deren anderes Ende eine kugelähnliche Form, beispielsweise einen Kugelkopf oder einen ovalen Kopf, aufweist. Während es sich bei dem Kugelzapfen um ein Standard-Bauteil aus Kunststoff oder Metall handelt, ist das Kupplungselement durch seine konstruktiven Gestaltungen an die gewünschten Verbindungseigenschaften zwischen dem ersten und dem zweiten Bauteil angepasst.

Um eine effektive Herstellung des Kupplungselements zu gewährleisten, ist das Kupplungselement vorzugsweise im Spritzgussverfahren aus Kunststoff einteilig hergestellt. Das Kupplungselement besteht aus einem ringförmigen Basiselement, wobei sich im radialen Inneren des Basiselements die pfannenartige Haltestruktur für den Kugelzapfen und an der Außenseite die Befestigungsstruktur für das Kupplungselement in dem ersten Bauteil befindet. Um das kugelförmige Ende des Kugelzapfens verlässlich und lösbar innerhalb der pfannenartigen Haltestruktur anordnen zu können, weist diese Haltestruktur ein zentral angeordnetes Stützelement auf. An diesem Stützelement liegt das kugelförmige Ende des Kugelzapfens an, nachdem dieser in die Haltestruktur eingeschnappt worden ist.

Diese Position des kugelförmigen Endes des Kugelzapfens wird durch eine Mehrzahl gleichmäßig in Umfangsrichtung des Basiselements verteilt angeordnete Haltestege gewährleistet. Diese Haltestege sind nur einseitig an das Basiselement angeformt, sodass ihr freies Ende in radialer Richtung federnd in das radiale Innere des Kupplungselements ragt. Zudem sind diese Haltestege in Einsetzrichtung, d.h. in Richtung des zentral angeordneten Stützelements geneigt, angeordnet, wenn man die Verlaufsrichtung der einzelnen Haltestege mit der Symmetrieachse des Kupplungselements vergleicht. Die Flexibilität und Anordnung der Haltestege in radialer Richtung stellt sicher, dass das kugelförmige Ende des Kugelzapfens in der Haltestruktur verrastet, aber auch wieder aus dieser gelöst werden kann. Gerade die winklige Zweiteilung der Haltestege in einen ersten und einen zweiten Stegabschnitt und die passende Ausrichtung im Raum und in Bezug auf den einzusetzenden Kugelkopf stellt eine verlässliche, aber zerstörungsfrei lösbare Verbindung sicher. Zu diesem Zweck verschwenkt das kugelförmige Ende beim Lösen aus der Haltestruktur die Haltestege gerade nicht in Richtung der Aufnahmeöffnung des Kupplungselements, wodurch die Aufnahmeöffnung blockiert werden würde. Diese Eigenschaft der Haltestege wird durch eine stumpfwinklige Anordnung des ersten und zweiten Stegabschnitts zueinander erzielt. Das bedeutet, dass die Stegabschnitte an ihrer radialen Innenseite bezogen auf das Kupplungselement einen Winkel einschließen, dessen Größe zwischen 90° und 180° liegt. Neben dieser stumpfwinkligen Anordnung des ersten und des zweiten Stegabschnitts zueinander ist gerade der erste Stegabschnitt, der bei in das Kupplungselement eingesetztem Kugelzapfen am kugelförmigen Ende des Kugelzapfens angreifen würde, in einem bestimmten Winkel zur Symmetrieachse des Kupplungselements angeordnet. Im Speziellen verläuft der erste Stegabschnitt in einem Winkelbereich von 45° ≤ α ≤ 90°auf das kugelförmige Ende des Kugelzapfens zu. Die winklige Orientierung des ersten Stegabschnitts stellt eine ausreichende Übertragung hoher Haltekräfte auf das kugelförmige Ende des Kugelzapfens sicher. Die winklige Orientierung des zweiten Stegabschnitts sowie die Ausrichtung des ersten und des zweiten Stegabschnitts zueinander gewährleisten, dass gerade beim Lösen des Kugelzapfens aus dem Kupplungselement die Haltestege nicht gestaucht, sondern radial nach außen versetzt werden. Dabei gleiten die am kugelförmigen Ende des Kugelzapfens angreifenden Enden des ersten Stegabschnitts an der Oberfläche des kugelförmigen Endes ab, sodass die Haltestege weder in Richtung der Aufnahmeöffnung verschwenkt noch in ihrer Längsrichtung gestaucht werden. Unterstützt werden diese Eigenschaften der Stegabschnitte dadurch, dass die Stegabschnitte bezogen auf ihre jeweilige Längsachse vorzugsweise geradlinig verlaufen.

Gemäß einer bevorzugten Ausführungsform vorliegender Erfindung ist mit einem radial inneren Ende des ersten Stegabschnitts bezogen auf die Steckkupplung das kugelförmige Ende des eingesetzten Kugelzapfens angreifbar und der zweite Stegabschnitt ist länger ausgebildet als der erste Stegabschnitt.

Eine variable Längeneinteilung des ersten und zweiten Stegabschnitts ermöglicht eine Anpassung des Angriffspunkts des ersten Stegabschnitts am kugelförmigen Ende des Kugelzapfens. Gleichzeitig wird aber auch gerade durch die Längeneinteilung der Stegabschnitte und die winklige Anordnung der Stegabschnitte innerhalb des Kupplungselements die Haltekraft bestimmt, mit der die Stege das kugelförmige Ende gegen die pfannenartige Haltestruktur drücken. Zudem beeinflussen die konstruktive Ausgestaltung vorteilhaft das Ausweichverhalten der Haltestege beim Einsetzen in und Lösen des Kugelkopfs aus der Haltestruktur.

Gemäß einer weiteren bevorzugten Ausführungsform vorliegender Erfindung schließt der erste Stegabschnitt mit der Symmetrieachse des Kupplungselements den Winkel α aus dem Bereich von 45° bis 60°, vorzugsweise 55° bis 60°, ein. Weiterhin bevorzugt schließen der erste und der zweite Stegabschnitt den bereits oben genannten stumpfen Winkel γ mit einer Größe von 90° < γ < 180°, weiter bevorzugt 90° < γ < 140°, ein.

Gemäß einer weiteren bevorzugten Ausführungsform vorliegender Erfindung umfasst die Steckkupplung eine Mehrzahl von radialen Führungsstegen, vorzugsweise drei gleichmäßig in Umfangsrichtung verteilte Führungsstege, die das ringförmige Basiselement und die pfannenartige Stützstruktur miteinander verbinden.

Diese Führungsstege führen das kugelförmige Ende des Kugelzapfens während der Einsetz- und Lösebewegung in das bzw. aus dem Kupplungselement. Zudem geben sie zusätzlich zu den am kugelförmigen Ende angreifenden ersten Stegabschnitten einen radialen Halt für das kugelförmige Ende innerhalb des Kupplungselements. Damit werden mechanische Belastungen des kugelförmigen Endes des Kugelzapfens über die radialen Führungsstege auf das ringförmige Basiselement und damit auf das Bauteil übertragen.

Gemäß einer weiteren bevorzugten Ausführungsform vorliegender Erfindung ist an dem Basiselement eine Befestigungsstruktur für das Kupplungselement vorgesehen, die einen radial auswärts ragenden und um das Basiselement umlaufenden Flansch sowie eine Mehrzahl von Raststegen aufweist, die am Kupplungselement einseitig befestigt und entgegen einer Einsetzrichtung des Kugelbolzens in das Kupplungselement geneigt angeordnet sind. Diese bevorzugte Befestigungsstruktur sorgt dafür, dass das Kupplungselement mit geringem Aufwand in einer Bauteilöffnung verrastet werden kann. Denn sobald das Kupplungselement in die an den Außendurchmesser des Basiselements angepasste Öffnung eingesetzt wird, stellt der umlaufende Flansch sicher, dass das Kupplungselement bis auf Anlage zwischen umlaufendem Flansch und Bauteil in der Öffnung aufgenommen wird. Bei diesem Einsetzen werden die Raststege radial einwärts in Richtung des Basiselements gedrückt, damit das Kupplungselement die Öffnung des Bauteils durchlaufen kann. Sobald der umlaufende Flansch am Bauteil anliegt, federn die Raststege radial nach außen, sodass das Kupplungselement am Bauteil zwischen Raststegen und umlaufendem Flansch gehalten wird. Entgegen der Einsetzrichtung lässt sich nun das Kupplungselement nicht aus der Öffnung im Bauteil herauslösen, da die radial nach außen gefederten Raststege einen Hinterschnitt gegen diese Bewegung bilden.

Gemäß einer weiteren bevorzugten Ausgestaltung vorliegender Erfindung sind der umlaufende Flansch und die Raststege über eine ringförmig umlaufende Wand miteinander verbunden. Diese Verbindung gibt dem Kupplungselement zusätzliche Stabilität. Vorzugsweise greifen die Raststege in axialer Richtung beabstandet vom umlaufenden Flansch und umfänglich gleichmäßig verteilt an der ringförmig umlaufenden Wand an, an der auch die Haltestege an der radialen Innenseite angeformt sind. Auf diese Weise wird eine eventuelle mechanische Belastung der hergestellten Verbindung nicht allein auf das Basiselement übertragen. Die mechanische Belastung verteilt sich mithilfe der ringförmig umlaufenden Wand auf die gesamte Kupplung, da beispielsweise mechanische Belastungen der Raststege über die umlaufende Wand vorzugsweise auch auf die radialen Führungsstege und somit den Kugelzapfen übertragen werden.

Vorzugsweise besteht die Steckkupplung aus Kunststoff, gemäß einer bevorzugten Ausführungsform aus einem thermoplastischen Elastomer oder einer Mischung derartiger Elastomere oder aus Elastomer (Gummi) oder aus Silikon. Der verwendete Kunststoff besitzt ebenfalls bevorzugt eine Shore-Härte im Bereich von 50 - 90 Shore A, wobei hier anwendungsbezogen auch andere Härten einsetzbar sind. Gemäß einer Ausführungsform ist der vewendete Kunststoff durch Füllstoffe verstärkt.

Zudem umfasst vorliegende Erfindung eine Verbindung aus einem ersten und einem zweiten Bauteil, in der das erste Bauteil in einer Bauteilöffnung das Kupplungselement gemäß den oben beschriebenen Ausführungsformen und das zweite Bauteil einen Kugelzapfen aufweist, dessen kugelförmiges Ende im Kupplungselement befestigt ist.

Zudem umfasst vorliegende Erfindung ein Herstellungsverfahren für die oben beschriebene Steckkupplung mithilfe eines Spritzgussverfahrens, wobei die Steckkupplung als ein Teil aus Kunststoff ausgeformt wird. Entsprechend gibt die Spritzgussform die oben beschriebenen konstruktiven Merkmale des Kupplungselements als negative und mit Kunststoff füllbare Formmerkmale vor.

Weiterhin umfasst die vorliegende Erfindung ein Spritzgussverfahren für ein Kupplungselement einer Steckkupplung, das die folgenden Schritte aufweist: Bereitstellen einer Spritzgussform, die die komplementären Merkmale des erfindungsgemäßen Kupplungselements aufweist, Spritzgießen des Kupplungselements in der Spritzgussform, Abkühlen des Kupplungselements und Entformen des Kupplungselements aus der Spritzgussform.

### 4. Kurze Beschreibung der begleitenden Zeichnungen

Die vorliegende Erfindung wird unter Bezugnahme auf die begleitenden Zeichnungen näher erläutert. Es zeigen:
- Figur 1: eine perspektivische Ansicht einer bevorzugten Ausführungsform des erfindungsgemäßen Kupplungselements,
- Figur 2: eine teilweise Schnittansicht einer bevorzugten Ausführungsform des erfindungsgemäßen Kupplungselements mit eingesetztem Kugelzapfen,
- Figur 3: eine Ausschnittsvergrößerung aus der Darstellung gemäß Fig. 2 und
- Figur 4: eine weitere teilweise Schnittansicht einer bevorzugten Ausführungsform des erfindungsgemäßen Kupplungselements mit eingesetztem Kugelzapfen.

### 5. Detaillierte Beschreibung der bevorzugten Ausführungsformen

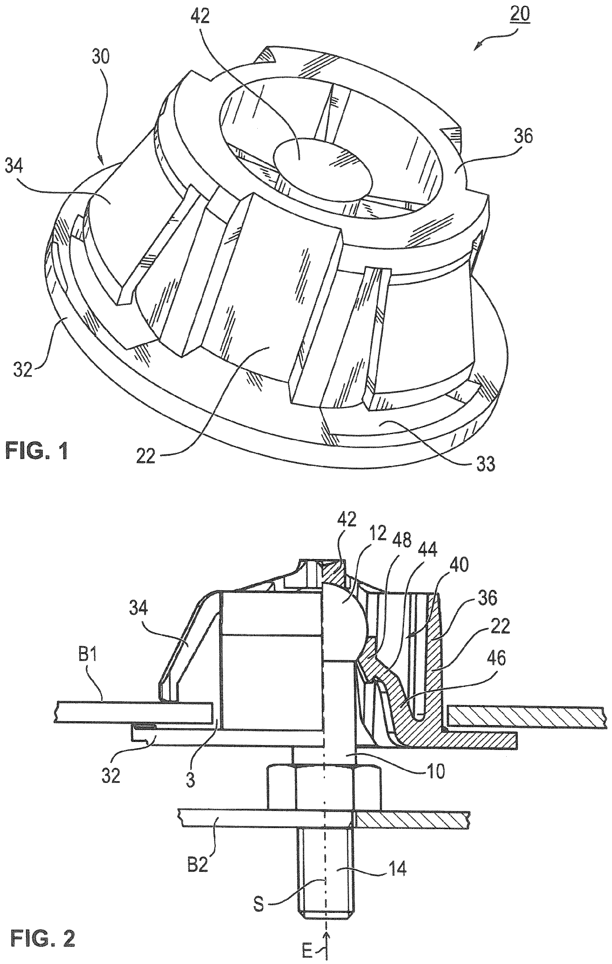

Fig. 1 zeigt eine bevorzugte Ausführungsform der erfindungsgemäßen Steckkupplung, wobei hier lediglich das Kupplungselement 20 perspektivisch dargestellt ist. Das Kupplungselement ist ein einteiliges Kunststoffteil, das mittels Spritzgießen hergestellt wird. Entsprechend wird eine Spritzgussform mit Kunststoff gefüllt, die die Merkmale des unten näher erläuterten Kupplungselements 20 vorgibt. Nach dem Spritzgießen und Abkühlen des Kupplungselements 20 wird das Kupplungselement 20 ausgeformt.

Vorzugsweise weist der Kunststoff des Kupplungselements 20 im abgekühlten Zustand eine Shore-Härte im Bereich von 20 bis 120 Shore A, vorzugsweise 20 bis 90, auf. Bei bevorzugten faserverstärkten Kunststoffen beeinflussen die Eigenschaften des Fasermaterials (Füllstoffe) und die Form, Größe und Verteilung der Fasern die mechanischen Eigenschaften des Materials.

Weiterhin bevorzugt besteht das einteilig hergestellte Kupplungselement 20 aus thermoplastischem Elastomer, wie vorzugsweise Polyamide (PA), Polypropylen (PP), Polyoxymethylen (POM), Polycarbonat (PC) oder Akrylnitril-Butadien-Styren (ABS) oder Kombinationen davon. Der genutzte Kunststoff ist vorzugsweise mit oder ohne Additive, wie Glasfasern, Glaskugeln und dgl. ausgestattet. Alternativ sind auch Duromere einsetzbar.

Das einteilige Kupplungselement 20 aus Kunststoff umfasst ein ringförmiges Basiselement 22. Gemäß einer Ausführungsform vorliegender Erfindung erstreckt sich von dem Basiselement 22 eine ringförmig umlaufende Wand 36, die eine pfannenartige Haltestruktur 40 einschließt. An einer radialen Außenseite des Basiselements 22 und vorzugsweise an der Wand 36 ist eine Befestigungstruktur 30 angeordnet, mit der das Kupplungselement 20 in einer Öffnung 3 des ersten Bauteils B1 befestigbar ist (siehe Fig. 2).

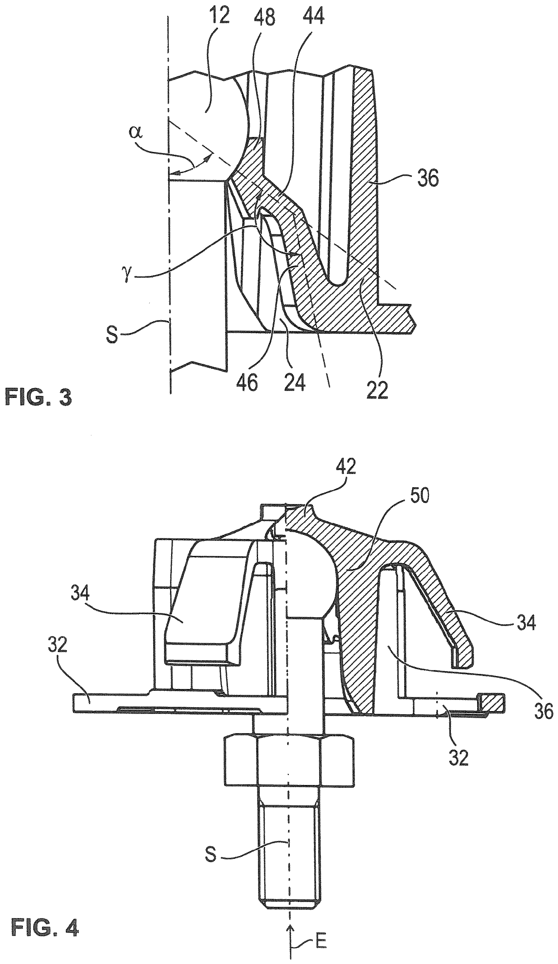

Die Befestigungsstruktur 30 umfasst einen sich radial auswärts erstreckenden Flansch 32. Der Flansch 32 ist umlaufend um das Befestigungselement 22 angeordnet. Nach Einsetzen des Kupplungselements 20 in die Bauteilöffnung 3 stützt sich der Flansch 32 an der Unterseite des ersten Bauteils B1 ab, wie es in den Figuren 2 und 4 gezeigt ist. Die Unterseite des Bauteils B1 ist dabei die Seite, die dem Flansch 32 und dem zweiten Bauteil B2 zugewandt ist. Zu diesem Zweck ist der Außendurchmesser des Flansches 32 größer als der Innendurchmesser der Öffnung 3 im Bauteil B1. Zudem ist der Flansch 32 vorzugsweise umfänglich geschlossen ausgebildet. Gemäß einer weiteren in Fig. 1 gezeigten Ausführungsform umfasst der Flansch 32 Durchbrüche 33. Gemäß einer weiteren nicht gezeigten Ausführungsform besteht der Flansch 32 aus einer Mehrzahl radialer Stege, die in Umfangsrichtung nicht miteinander verbunden sind.

Dem Flansch 32 gegenüberliegend ist eine Mehrzahl von Raststegen 34 angeordnet. Bevorzugt sind die Raststege 34 gleichmäßig in Umfangsrichtung verteilt an der Wand 36 vorgesehen. Um ein Verrasten des Kupplungselements 20 in der Bauteilöffnung 3 zu gewährleisten, sind die Raststege 34 einseitig an der Wand 36 angeformt und erstrecken sich entgegen der Einsetzrichtung E. Die Raststege 34 sind im Vergleich zur Symmetrieachse S geneigt, sodass sie bei einer radialen mechanischen Belastung während des Einsetzens des Kupplungselements 20 in die Bauteilöffnung 3 radial einwärts federn können. Sobald das Kupplungselement 20 vollständig in die Bauteilöffnung 3 eingesetzt ist, federn die Raststege 34 in ihre Ausgangsposition zurück. In diesem Zustand ist das erste Bauteil B1 zwischen dem Raststeg 34 und dem umlaufenden Flansch 32 eingeklemmt.

Vorzugsweise sind die Raststege 34 angrenzend an das dem Flansch 32 abgewandte axiale Ende der umlaufenden Wand 36 oder nahe diesem angeformt.

Im radialen Inneren des Basiselements 22 ist die pfannenartige Haltestruktur 40 zur Befestigung des kugelförmigen Endes 12 des Kugelzapfens 10 vorgesehen. Der Kugelzapfen 10 wird häufig auch als Kugelbolzen bezeichnet. Das kugelförmige Ende 12 bezeichnet jede Struktur, die in der Haltestruktur befestigbar ist, wie beispielsweise einen Kugelkopf, einen abgeflachten oder ovalen oder elliptischen Kopf, um nur einige Beispiele zu nennen.

Das kugelförmige Ende 12 stützt sich nach dem Einsetzen des Kugelzapfens 10 in das Kupplungselement 20 an einem mittig angeordneten Stützelement 42 ab. Das Stützelement 42 bildet ein Flächenelement, das bevorzugt komplementär zur Form des kugelförmigen Endes 12 ausgebildet ist. Hier sind aber auch andere Formen bevorzugt, die eine Stützfunktion für das kugelförmige Ende 12 realisieren. Entsprechend kann das Stützelement 42 auch nur eine punktuelle Anlage für das kugelförmige Ende 12 bereitstellen, wenn eine ausreichende radiale Stütze durch weitere Elemente der Haltestruktur 40, wie bspw. durch Haltestege, realisiert wird (siehe unten).

Im eingesetzten Zustand wird das kugelförmige Ende 12 durch eine Mehrzahl von Haltestegen 44, 46 gegen das Stützelement 42 gedrückt und in Position gehalten. Die Haltestege 44, 46 sind einseitig am ringförmigen Basiselement 22 angeformt und bevorzugt in Umfangsrichtung gleichmäßig verteilt. Die Haltestege 44, 46 verlaufen in Einsetzrichtung E und sind in Bezug auf die Symmetrieachse S geneigt, angeordnet.

Wie man anhand der Figuren 2 und 3 erkennen kann, umfasst jeder Haltesteg zumindest einen ersten 44 und einen zweiten winklig zueinander ausgerichteten Stegabschnitt 46. Der zweite Stegabschnitt 46 ist bevorzugt mit dem Basiselement 22 verbunden und geht dann winklig in den ersten Stegabschnitt 44 über. Der erste Stegabschnitt 44 weist ein radial inneres Ende 48 auf. Vorzugsweise ist das radial innere Ende 48 als Anlageelement ausgebildet, das am kugelförmigen Ende 12 angreift und die mechanischen Stütz- und Haltekräfte des Haltestegs 44, 46 auf das kugelförmige Ende 12 überträgt.

Gemäß einer bevorzugten Ausführungsform umfasst das Ende 48 zumindest eine Anlagefläche 48a, die den Kugelkopf 12 im eingesetzten Zustand stützt. Die Anlagefläche 48a ist vorzugsweise komplementär zur anliegenden Fläche des Kugelkopfs 12 geformt, bspw. wie ein Kugelsegment. Zumindest ist die Anlagefläche 48a bevorzugt in einen Winkel von 30° bis 60° zur Einsetzrichtung E oder Symmetrieachse S angeordnet.

Weiterhin bevorzugt umfasst das Ende 48 eine Einführhilfe. Die Einführhilfe stellt ebenfalls ein Flächenelement dar, welches in Kombination mit den Einführhilfen der anderen Haltestege 44, 48 einen Einführtrichter für den Kugelkopf 12 in die Haltestruktur 40 bilden. Zu diesem Zweck schließt die Einführhilfe bevorzugt einen Winkel kleiner 45° mit der Symmetrieachse S ein.

In Fig. 3 sind die vorzugsweise linear verlaufenden Stegabschnitte 44, 46 aus Fig. 2 vergrößert dargestellt. Der lineare Verlauf bezieht sich dabei auf die Längsachse des jeweiligen Stegabschnitts 44, 46. Die winklige Anordnung der Stegabschnitte 44, 46 in Bezug auf die Symmetrieachse S und in Bezug aufeinander wurde ausgewählt, um ein Einsetzen, ein mechanisch belastbares Halten und ein zerstörungsfreies Entfernen des kugelförmigen Endes 12 aus der Haltestruktur 40 zu gewährleisten. Zu diesem Zweck ist der erste Stegabschnitt 44 in einem Winkel α in Bezug auf die Symmetrieachse S angeordnet, sodass eine optimale Übertragung der mechanischen Haltekräfte des Haltestegs 44, 46 auf das kugelförmige Element 12 erfolgt. Der Winkel α wird zwischen den Längsachsen der Stegabschnitte 44, 46 gemessen. Er hat eine Größe im Bereich von 45° bis 60°, vorzugsweise 55° bis 60° und am meisten bevorzugt von 57,5°.

Um zu gewährleisten, dass beim Entfernen des kugelförmigen Endes 12 aus der Haltestruktur 40 die Haltestege 44, 46 radial auswärts bewegt werden, ist ein stumpfer Winkel γ zwischen dem ersten 44 und dem zweiten Stegabschnitt 46 vorgesehen. Der Winkel γ hat eine Größe im Bereich von 90° < γ < 180°, bevorzugt 110° < γ < 165°.

In diesem Zusammenhang ist es weiterhin bevorzugt, dass der erste Stegabschnitt 44 kürzer oder gleich dem zweiten Stegabschnitt 46 ausgebildet ist. Mithilfe der Längenvariation der Stegabschnitte 44, 46 sind die Größe und Richtung der radial einwärts gerichteten Haltekraft des Haltestegs 44, 46 einstellbar.

Aufgrund dieser stumpfwinkligen Anordnung wird der Haltesteg 44, 46 beim Entfernen des kugelförmigen Endes 12 nicht gestaucht oder radial einwärts verformt. Dies ermöglicht ein zerstörungsfreies Verbinden und Lösen der Verbindung aus Kupplungselement 20 und Kugelzapfen 10.

Weiterhin bevorzugt umfasst die Haltestruktur eine Mehrzahl von radialen Führungsstegen 50, die gleichmäßig umfänglich verteilt angeordnet sind. Die radialen Führungsstege 50 verbinden das Basiselement 22 und das Stützelement 42. Gleichzeitig ist die radial innere Stirnseite des einzelnen Führungsstegs 50 derart angeordnet, dass sie eine radial äußere Stütze für das kugelförmige Ende 12 des Kugelzapfens 10 bereitstellt. Entsprechend ist der Führungssteg 50 benachbart zum Stützelement 42 abgerundet oder komplementär zum kugelförmigen Ende 12 geformt, um an die Form des kugelförmigen Endes 12 angepasst zu sein. Ebenfalls bevorzugt sind drei, vier oder fünf Führungsstege 50 vorgesehen, die sich jeweils in Umfangsrichtung mit einem Haltesteg 44, 46 abwechseln.

### Bezugszeichenliste

- B1: erstes Bauteil
- B2: zweites Bauteil
- 3: Öffnung im ersten Bauteil
- 10: Kugelbolzen/Kugelzapfen
- 12: Kugelförmiges Ende
- 14: Befestigungsende des Kugelzapfens
- 20: Kupplungselement
- 22: Basiselement
- 24: Aufnahmeöffnung
- 30: Befestigungsstruktur
- 32: Flansch
- 33: Durchbruch
- 34: Raststeg
- 36: ringförmig umlaufende Wand
- 40: pfannenartige Haltestruktur
- 42: mittig angeordnetes Stützelement
- 44, 46: Haltesteg
- 44, 46: Stegabschnitt
- 48: radial inneres Ende
- 48a: Anlagefläche
- 50: radialer Führungssteg
- S: Symmetrieachse des Kupplungselements 20
- E: Einsetzrichtung des kugelförmigen Elements in das Kupplungselement
- α, γ: Winkel

## Patentansprüche

1. Kupplungselement (20) einer Steckkupplung zum lösbaren Verbinden eines ersten Bauteils (B1) mit einem zweiten Bauteil (B2), in der ein Kugelzapfen (10) in dem Kupplungselement (20) aufnehmbar ist, und das die folgenden Merkmale umfasst:
a. das Kupplungselement (20) ist einteilig aus Kunststoff aufgebaut mit einem ringförmigen Basiselement (22), das eine Aufnahmeöffnung (24) für den Kugelzapfen (10) bildet, und das
a1. eine Befestigungsstruktur (30) an einer radialen Außenseite des Basiselements (22) aufweist, mit der das Kupplungselement (20) in einer Öffnung (3) des ersten Bauteils (B1) befestigbar ist, und das
a2. eine pfannenartige Haltestruktur (40) an einer radialen Innenseite des Basiselements (22) umfasst, in der ein kugelförmiges Ende (12) des Kugelzapfens (10) einrastbar und aus der das kugelförmige Ende (12) ohne Beschädigung der Haltestruktur (40) lösbar ist, wobei
b. die pfannenartige Haltestruktur (40) aufweist:
ein mittig angeordnetes Stützelement (42), an dem das kugelförmige Ende (12) des Kugelzapfens (10) abstützbar ist, sowie
eine Mehrzahl von einseitig am ringförmigen Basiselement (22) angeformten Haltestegen (44, 46), die federnd radial einwärts und in einer Einsetzrichtung (E) des Kugelzapfens (10) geneigt in das Kupplungselement (20) ragen, so dass ein freies Ende jedes Haltestegs (44, 46) in radialer Richtung federnd in das radiale Innere des Kupplungselements (20) ragt, wobei
die Haltestege (44, 46) zumindest einen ersten (44) und einen zweiten, vorzugsweise gerade, winklig zueinander ausgerichteten Stegabschnitt (46) aufweisen, die miteinander verbunden sind, der erste Stegabschnitt (44) das freie Ende des jeweiligen Haltestegs aufweist, der erste Stegabschnitt (44) mit einer Symmetrieachse (S) des Kupplungselements (20) einen Winkel α aus einem Bereich von 45°≤ α ≤ 90° einschließt und der erste Stegabschnitt (44) und der zweite Stegabschnitt (46) in einem stumpfen Winkel zueinander angeordnet sind.

2. Kupplungselement gemäß Anspruch 1, in dem mit einem radial inneren Ende (48) des ersten Stegabschnitts (44) bezogen auf das Kupplungselement das kugelförmige Ende (12) des Kugelzapfens (10) angreifbar ist und der zweite Stegabschnitt (46) länger ausgebildet ist als der erste Stegabschnitt (44).

3. Kupplungselement gemäß Anspruch 1 oder 2, in dem der erste Stegabschnitt (44) mit der Symmetrieachse (S) des Kupplungselements (20) den Winkel α aus dem Bereich von 45° bis 60°, vorzugsweise 55° bis 60°, einschließt.

4. Kupplungselement gemäß einem der vorhergehenden Ansprüche, das eine Mehrzahl von radialen Führungsstegen (50), vorzugsweise drei in Umfangsrichtung gleichmäßig verteilte Führungsstege, aufweist, die das ringförmige Basiselement (22) und die pfannenartige Stützstruktur (42) miteinander verbinden.

5. Kupplungselement gemäß einem der vorhergehenden Ansprüche, an dessen Basiselement (22) die Befestigungsstruktur (30) für das Kupplungselement vorgesehen ist, die einen radial auswärts ragenden und um das Basiselement (22) umlaufenden Flansch (32) sowie eine Mehrzahl von Raststegen (34) aufweist, die am Kupplungselement (20) einseitig befestigt und entgegen einer Einsetzrichtung (E) des Kugelbolzens (10) in das Kupplungselement (20) geneigt angeordnet sind.

6. Kupplungselement gemäß Anspruch 5, in dem der umlaufende Flansch (32) und die Raststege (34) über eine ringförmig umlaufende Wand (36) miteinander verbunden sind.

7. Kupplungselement gemäß einem der vorhergehenden Ansprüche, das aus einem Kunststoff mit einer Shore-Härte im Bereich von 50 - 90 Shore A besteht.

8. Steckkupplung mit einem Kupplungselement gemäß einem der vorhergehenden Ansprüche und einem Kugelzapfen (10).

9. Verbindung aus einem ersten (B1) und einem zweiten Bauteil (B2), in der das erste Bauteil (B1) in einer Bauteilöffnung (3) das Kupplungselement (20) gemäß einem der Ansprüche 1 bis 7 und das zweite Bauteil (B2) einen Kugelzapfen (10) aufweist, dessen kugelförmiges Ende (12) in dem Kupplungselement befestigt oder befestigbar ist.

10. Spritzgussverfahren für ein Kupplungselement (20) einer Steckkupplung gemäß einem der Ansprüche 1 bis 7, das die folgenden Schritte aufweist:
Bereitstellen einer Spritzgussform, die die komplementären Merkmale des Kupplungselements gemäß einem der Ansprüche 1 bis 7 aufweist,
Spritzgießen des Kupplungselements in der Spritzgussform,
Abkühlen des Kupplungselements und
Entformen des Kupplungselements aus der Spritzgussform.

## Claims

1. Coupling element (20) of a plug-in coupling for the releasable connection of a first component (B1) to a second component (B2), in which a ball stud (10) is receivable in the coupling element (20), and which comprises the following features:
a. the coupling element (20) is constructed in one piece of plastic having an annular basic element (22) forming a receiving opening (24) for the ball stud (10) and that
a1. comprises a fastening structure (30) at a radial outer side of the basic element (22) by means of which the coupling element (20) is fastenable in an opening (3) of the first component (B1), and that
a2. comprises a socket-like holding structure (40) at a radial inner side of the basic element (22), in which a ball-shaped end (12) of the ball stud (10) can snap-in and from which the ball-shaped end (12) is detachable without damaging the holding structure (40), wherein
b. the socket-like holding structure (40) comprises:
a centrally arranged supporting element (42) at which the ball-shaped end (12) of the ball stud (10) can abut, as well as
a plurality of holding webs (44, 46) integrally formed at one side with the annular basic element (22), wherein the holding webs (44, 46) protrude resiliently radially inwardly and inclined in an insertion direction (E) of the ball stud (10) into the coupling element (20), so that a free end of each holding web (44, 46) protrudes resiliently in a radial direction into the radial interior of the coupling element (20), wherein
the holding webs (44, 46) comprise at least a first (44) and a second, preferably straight, web section (46) which are arranged angularly with respect to each other and which are connected to each other, wherein the first web section (44) encloses with an axis of symmetry (S) of the coupling element (20) an angle oc from a range of 45° ≤ ∝ ≤ 90° and the first web section (44) and the second web section (46) are arranged in an obtuse angle with respect to each other.

2. Coupling element according to claim 1, in which the ball-shaped end (12) of the ball stud (10) can be engaged by a radial inner end (48) of the first web section (44) with respect to the coupling element and the second web section (46) is formed longer as the first web section (44).

3. Coupling element according to claim 1 or 2, in which the first web section (44) encloses with the axis of symmetry (S) of the coupling element (20) the angle oc from the range of 45° to 60°, preferably 55° to 60°.

4. Coupling element according to one of the preceding claims, comprising a plurality of radial leading webs (50), preferably three leading webs equally distributed in circumferential direction, which connects the annular basic element (22) and the socket-like support structure (42) with each other.

5. Coupling element according to one of the preceding claims, at the basic element (22) of which the fastening structure (30) for the coupling element is provided, which comprises a flange (32), which protrudes radially outwardly and extends circumferentially around the basic element (22), as well as a plurality of locking webs (34), which are attached with one side at the coupling element (20) and which are inclined against an insertion direction (E) of the ball pin (10) into the coupling element (20).

6. Coupling element according to claim 5, in which the circumferential flange (32) and the locking webs (34) are connected to each other by means of an annular circumferential wall (36).

7. Coupling element according to one of the preceding claims, which consists of a plastic having a shore hardness in the range of 50 to 90 shore A.

8. Plug-in coupling having a coupling element according to one of the preceding claims and a ball stud (10).

9. Connection of a first (B1) and a second component (B2), in which the first component (B1) comprises the plug-in coupling according to one of the preceding claims 1 to 7 and the second component (B2) comprises a ball stud (10), the ball-shaped end (12) of which is fastened or fastenable in the plug-in coupling.

10. Injection moulding method for a coupling element (20) of a plug-in coupling according to one of the claims 1 to 7, comprising the following steps:
providing an injection mould having the complementary features of the coupling element according to one of the claims 1 to 7,
injection moulding of the coupling element in the injection mould,
cooling down of the coupling element and
de-moulding the coupling element from the injection mould.

## Revendications

1. Élément de couplage (20) d'un raccord enfichable servant à relier de manière amovible un premier composant (B1) à un second composant (B2), où un pivot à rotule (10) peut être logé dans l'élément de couplage (20), et qui comporte les caractéristiques suivantes :
a. l'élément de couplage (20) est composé d'une seule pièce en matière plastique avec un élément de base en forme de bague (22), qui constitue une ouverture de réception (24) du pivot à rotule (10), et qui
a1. présente une structure de fixation (30) sur un côté extérieur radial de l'élément de base (22), à laquelle l'élément de couplage (20) peut être fixé dans une ouverture (3) du premier composant (B1), et qui
a2. comprend une structure de maintien (40) de type cuvette sur un côté intérieur radial de l'élément de base (22), dans laquelle une extrémité sphérique (12) du pivot à rotule (10) peut être encliquetée et hors de laquelle l'extrémité sphérique (12) est détachable sans endommager la structure de maintien (40), dans lequel
b. la structure de maintien (40) de type cuvette présente :
un élément de support disposé au centre (42), sur lequel l'extrémité sphérique (12) du pivot à rotule (10) peut s'appuyer, ainsi que
de multiples nervures de maintien (44, 46) moulées d'un côté sur l'élément de base en forme de bague (22), qui se dressent radialement vers l'intérieur de manière élastique et en inclinaison à l'intérieur de l'élément de couplage (20) dans un sens d'insertion (E) du pivot à rotule (10), de sorte qu'une extrémité libre de chaque nervure de maintien (44, 46) se dresse en direction radiale de manière élastique à l'intérieur radial de l'élément de couplage (20), dans lequel
les nervures de maintien (44, 46) présentent au moins un premier tronçon (44) et un second tronçon de nervure (46) de préférence droit, orientés à un certain angle l'un par rapport à l'autre, qui sont reliés l'un à l'autre, le premier tronçon de nervure (44) présente l'extrémité libre de la nervure de maintien respective, le premier tronçon de nervure (44) forme un angle α compris dans une plage de 45° ≤ α ≤ 90° avec un axe de symétrie (S) de l'élément de couplage (20), tandis que le premier tronçon de nervure (44) et le second tronçon de nervure (46) sont disposés à un angle obtus l'un de l'autre.

2. Élément de couplage selon la revendication 1, dans lequel l'extrémité sphérique (12) du pivot à rotule (10) peut être mise en prise avec une extrémité intérieure radiale (48) du premier tronçon de nervure (44) par rapport à l'élément de couplage et le second tronçon de nervure (46) est conçu de manière à être plus long que le premier tronçon de nervure (44).

3. Élément de couplage selon la revendication 1 ou 2, dans lequel le premier tronçon de nervure (44) forme l'angle α compris dans la plage de 45° à 60°, de préférence de 55° à 60°, avec l'axe de symétrie (S) de l'élément de couplage (20).

4. Élément de couplage selon l'une des revendications précédentes, qui présente de multiples nervures de guidage radiales (50), de préférence trois nervures de guidage réparties uniformément dans la direction périphérique, qui relient l'élément de base en forme de bague (22) à la structure de support (42) de type cuvette l'un à l'autre.

5. Élément de couplage selon l'une des revendications précédentes, sur l'élément de base (22) duquel la structure de fixation (30) de l'élément de couplage est prévue, qui présente une collerette périphérique (32) autour de l'élément de base (22) dépassant radialement vers l'extérieur ainsi que de multiples nervures d'encliquetage (34), qui sont fixées d'un côté à l'élément de couplage (20) et disposées en inclinaison à l'intérieur de l'élément de couplage (20) dans un sens opposé d'insertion (E) du pivot à rotule (10).

6. Élément de couplage selon la revendication 5, dans lequel la collerette périphérique (32) et les nervures d'encliquetage (34) sont reliées entre elles par une paroi circulaire annulaire (36).

7. Élément de couplage selon l'une des revendications précédentes, qui est composé d'une matière plastique d'une dureté Shore comprise dans la plage de 50 - 90 Shore A.

8. Raccord enfichable avec un élément de couplage selon l'une des revendications précédentes et avec un pivot à rotule (10).

9. Raccordement d'un premier composant (B1) et d'un second composant (B2), dans lequel le premier composant (B1) présente l'élément de couplage (20) selon l'une des revendications 1 à 7 dans une ouverture de composant (3) et le second composant (B2) comporte un pivot à rotule (10), dont l'extrémité sphérique (12) est fixée ou peut être fixée à l'élément de couplage.

10. Procédé de moulage par injection d'un élément de couplage (20) d'un raccord enfichable selon l'une des revendications 1 à 7, qui présente les étapes suivantes :
la préparation d'un moule d'injection, qui présente les caractéristiques complémentaires de l'élément de couplage selon l'une des revendications 1 à 7,
le moulage par injection de l'élément de couplage dans le moule d'injection,
le refroidissement de l'élément de couplage et
le démoulage de l'élément de couplage hors du moule d'injection.
